# EUROPÄISCHE PATENTSCHRIFT

(11) **EP 3 250 484 B1**
(45) Veröffentlichungstag und Bekanntmachung des Hinweises auf die Patenterteilung: **11.12.2019**
(21) Anmeldenummer: 16700395.3
(22) Anmeldetag: 07.01.2016
(51) Int. Cl.: B65G 17/20, B65G 19/02, B65G 9/00, B65G 47/38, B65G 47/61

(54) **TRANSPORTVORRICHTUNG IN FORM EINES HÄNGEFÖRDERERS**
TRANSPORT DEVICE IN THE FORM OF A SUSPENSION CONVEYOR
DISPOSITIF DE TRANSPORT SOUS LA FORME D'UN CONVOYEUR AÉRIEN

(30) Priorität: 26.01.2015 CH 892015
(43) Veröffentlichungstag der Anmeldung: 06.12.2017
(73) Patentinhaber: Ferag AG, 8340 Hinwil (CH)
(72) Erfinder: FENILE, Roberto, 8623 Wetzikon (CH)
(74) Vertreter: Rentsch Partner AG
(86) Internationale Anmeldenummer: PCT/EP2016/050158
(87) Internationale Veröffentlichungsnummer: WO 2016/120030

(56) Entgegenhaltungen:
- DE-A1- 2 221 318
- DE-A1- 10 309 127
- DE-A1-102004 018 569
- DE-A1-102008 026 720
- DE-B- 1 233 777
- DE-U1- 8 133 433
- GB-A- 733 714

## Beschreibung

### TECHNISCHES GEBIET

Die vorliegende Erfindung bezieht sich auf das Gebiet der Fördertechnik. Sie betrifft eine Transportvorrichtung gemäss dem Oberbegriff des Anspruchs 1.

### STAND DER TECHNIK

Im Stand der Technik ist eine Vielzahl von Hängeförderern bekannt, bei denen das zu fördernde Fördergut von Transporttaschen aufgenommen wird, die vergleichsweise aufwändig ausgebildet sind und mit aufwändigen Öffnungs- und Verschlussmechanismen ausgestattet sind, die gerade bei einer grösseren Förderanlage mit vielen einzelnen Taschen einerseits einen erheblichen Mehraufwand bei der Errichtung einer neuen Anlage zur Folge haben und andererseits im Dauerbetrieb eine erhöhte Anfälligkeit für Fehlfunktionen oder einen vollständigen Funktionsausfall haben.

Die Druckschrift DE 10 2008 061 685 A1 offenbart eine Belade-Station für in einer Hänge-Förder-Anlage transportierte Transport-Taschen, mit einer oberen Zuführ-Schiene für die Transport-Taschen, mit einem sich an die Zuführ-Schiene anschließenden Senkrecht-Förderer zum Zuführen der Transport-Taschen in eine untere Belade-Position, mit einer Einrichtung zum Öffnen der Transport-Taschen in der Belade-Position und mit einer sich an den Senkrecht-Förderer anschließenden unteren Abführ-Schiene zum Abführen der Transport-Taschen aus der Belade-Position.

Die Druckschrift DE 10 2008 026 720 A1 beschreibt eine Transport-Tasche mit einer Trage-Wand, die an ihrem oberen Bereich mit einer Trage-Kupplung und einem schwenkbaren Bügel, an ihrem unteren Bereich mit mindestens einer Kupplung, an ihrem oberen Bereich mit Mitteln zum Öffnen der Kupplung und mit Mitteln zum Schließen der Kupplung versehen ist und mit einer zumindest im unteren Bereich flexiblen Boden-Seiten-Wand, die in ihrem oberen Bereich mit dem schwenkbaren Bügel verbunden ist und in ihrem unteren Bereich mit Gegen-Kupplungs-Mitteln zur Aufnahme in der mindestens einen Kupplung versehen ist. Sie offenbart zudem eine Transportvorrichtung, in Form eines Hängeförderers, welche Transportvorrichtung einen oder mehrere Laufwagen umfasst, die an einer Laufschiene in Laufschienenrichtung beweglich gelagert sind und an denen jeweils nach unten hängend eine Vorrichtung zur Aufnahme von Transportgut angeordnet ist, wobei die Vorrichtung zur Aufnahme von Transportgut wenigstens eine, im geöffneten Zustand ebene, flexible und in einem ungeführten Zustand herunterhängende Materialbahn umfasst, welche mit ihren beiden Enden unter Ausbildung einer nach unten hängenden an beiden Seiten offenen Tragschlaufe bzw. Transportschlaufe am Laufwagen befestigbar ist, wobei die Vorrichtung zur Aufnahme von Transportgut einen Tragerahmen zur Befestigung der besagten Vorrichtung an einem der Laufwagen aufweist, wobei an den beiden Enden der wenigstens einen Materialbahn erste und zweite Vorrichtungen zum Befestigen der Materialbahn an dem Tragerahmen angeordnet sind, wobei die erste Vorrichtung zum Befestigen der wenigstens einen Materialbahn mit dem Tragerahmen fest verbunden ist, und die zweite Vorrichtung zum Befestigen der wenigstens einen Materialbahn mit dem Tragerahmen lösbar verbunden ist.

Die Druckschrift DE 10 2011 101 987 A1 offenbart eine Transporttasche zur Beförderung eines Fördergutes in einer Förderanlage, insbesondere einer Hängeförderanlage, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel eine Verschlussklappe aufweist, die eine Handhabungslasche mit einem Klemmabschnitt aufweist, wobei das Trägerteil eine Klemmeinrichtung mit einem Klemmhebel aufweist, der zwischen einer Haltestellung, in der eine Haltekraft auf den Klemmabschnitt einwirkt, und einer Freigabestellung verlagerbar ist, und wobei der Klemmhebel in der Haltestellung derart mit dem Klemmabschnitt gekoppelt ist, dass das aufgenommene Fördergut durch sein Gewicht eine Erhöhung der Haltekraft bewirkt.

Die Druckschrift DE 10 2012 108 757 A1 betrifft eine Tragetasche für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden. Der Taschenbeutel weist einen ersten und einen zweiten Beutelabschnitt auf, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung versehen ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann.

Die Druckschrift DE 10 2013 205 172 A1 offenbart eine Transporttasche zum hängenden Transport von Waren. Die Transporttasche hat eine steife Tragwand, die in ihrem in Transportstellung oberen Abschnitt mit einem Tragelement zum hängenden Tragen der Transporttasche verbunden ist. Eine flexible Waren-Haltewand bildet mit der Tragwand eine zumindest in der Transportstellung der Transporttasche nach unten und zu zwei gegenüberliegenden Seiten hin geschlossene Tragtasche. Die Tragwand ist mit der Haltewand zwischen einem in der Transportstellung oberen Wand-Verbindungsabschnitt und einem in der Transportstellung unteren Wand-Verbindungsabschnitt derart verbunden, dass eine Länge der bahnförmigen Haltewand zwischen den beiden Wand-Verbindungsabschnitten variabel an den Transport verschiedener Waren angepasst werden. Die Ausführung der Transporttasche ist derart, dass diese Längenanpassung der Haltewand durch eine Relativverlagerung der Haltewand zur Tragwand zumindest im Bereich eines der beiden Verbindungsabschnitte erfolgt.

### DARSTELLUNG DER ERFINDUNG

Es ist daher eine Aufgabe der Erfindung, eine Transportvorrichtung nach Art eines Hängeförderers anzugeben, die vielseitig und flexibel einsetzbar ist, gleichermassen eine einfache manuelle Bedienung aber auch eine vollautomatische Förderung zulässt und sich durch einen einfachen Aufbau und deutlich verringerte Fehleranfälligkeit auszeichnet. Die Aufgabe wird durch die Merkmale des Anspruchs 1 gelöst. Vorteilhafte Ausgestaltungen der erfindungsgemässen Vorrichtung ergeben sich aus den abhängigen Ansprüchen.

Die erfindungsgemässe Transportvorrichtung, die in Form eines Hängeförderers ausgebildet ist, umfasst einen oder mehrere Laufwagen, die an einer Laufschiene in Laufschienenrichtung beweglich gelagert sind und an denen jeweils nach unten hängend eine Vorrichtung zur Aufnahme von Transportgut angeordnet ist.

Die Vorrichtung zur Aufnahme von Transportgut bildet wenigstens eine im geöffneten Zustand ebene, flexible Materialbahn, welche mit ihren beiden Enden unter Ausbildung einer nach unten hängenden Tragschlaufe bzw. Transportschlaufe am Laufwagen befestigbar ist.

Sind mehrere Laufwagen vorhanden, können diese einzeln bewegt werden, aber auch untereinander zu mehreren miteinander verkettet sein und im Extremfall eine geschlossene umlaufende Kette bilden.

Die flexible Materialbahn bildet im geschlossenen Zustand eine an beiden Seiten offene, seitenwandlose Transportschlaufe von tropfenförmiger Randkontur, in die ein Fördergut eingebracht und dort während des Fördervorgangs sicher gehalten werden kann. Zum Entleeren der Transportschlaufe wird diese (einseitig) geöffnet, so dass die Materialbahn (im ungeführten Zustand) herunterhängt und das vorher gehaltene Fördergut frei gibt.

Die Materialbahn muss einerseits ausreichend flexibel sein, um sich an das Fördergut anpassen zu können. Andererseits muss sie aber auch ausreichend stabil sein, um die Tropfenkontur auszubilden und auch beim Einfüllen eines Fördergutes wenigstens annähernd beizubehalten.

Gemäss einer Ausgestaltung der Erfindung weist die wenigstens eine Materialbahn eine rechteckige Form mit einer vorgegebenen Breite und einer vorgegebenen Länge auf.

Insbesondere weist die wenigstens eine Materialbahn ein Verhältnis von Breite (B) zu Länge (L) grösser 0,1 auf. Die Breite kann einige Hundert mm betragen.

Wenn die Vorrichtung beispielsweise zum Fördern von Kleidungsstücken oder ähnlich grossem Fördergut eingesetzt werden soll, ist es zweckmässig, wenn die Materialbahn eine Breite von etwa 500 mm aufweist.

Gemäss einer anderen Ausgestaltung der Erfindung besteht die wenigstens eine Materialbahn aus einem Gewebe, welches insbesondere beschichtet sein kann.

Mit einer geeigneten Beschichtung kann das Gewebe wahlweise steifer, glatter, stumpfer, elektrisch leitfähig oder feuchtigkeitsunempfindlich gemacht werden, um die Eigenschaften der Materialbahn an das zu fördernde Gut anzupassen. Das Gewebe kann je nach Anforderung aus natürlichen oder künstlichen Fasern hergestellt sein. So bietet sich ein Gewebe aus hochfesten Fasern an, wenn schwere, kantige Gegenstände transportiert werden sollen. Auch kann die Gewebeart dem Einsatzzweck angepasst werden.

Es ist aber auch denkbar, dass die wenigstens eine Materialbahn aus einer Folie besteht, die insbesondere, auch laminiert sein und aus mehreren miteinander verbundenen Schichten bestehen kann.

Weiterhin ist es denkbar und von dem Begriff "Materialbahn" mitumfasst, dass die Materialbahn als Modulbandkette oder Mattenkette ausgebildet ist, wie sie dem Fachmann aus dem Gebiet der Fördertechnik bekannt ist.

An den beiden Enden der wenigstens einen Materialbahn sind erste und zweite Vorrichtungen zum Befestigen der Materialbahn an einem der Laufwagen angeordnet. Diese Vorrichtungen müssen so beschaffen sein, dass sie die vom Fördergut auf die Materialbahn ausgeübten Gewichtskräfte aus- und abreisssicher in den Laufwagen einleiten können. Auch müssen sie die Materialbahn in ihrer Breite stabilisieren, damit sie sich nicht bei Belastung beutelartig zusammenfaltet. Insbesondere umfassen die Vorrichtungen zum Befestigen der Materialbahn am Laufwagen je eine Querstange an jedem Ende der Materialbahn. Die aus Metall oder Kunststoff oder Holz bestehenden Querstangen nehmen die über der Breite der Materialbahn angreifenden Gewichtskräfte auf und können sie konzentriert in den Laufwagen einleiten. Eine runde oder abgerundete Querschnittskontur der Querstangen verhindert dabei sicher eine Kerbwirkung und ein frühzeitiges Einreissen der Gewebebahn.

Besonders einfach gestaltet sich der Übergang von der Materialbahn zur jeweiligen Querstange, wenn die Querstangen in dafür vorgesehenen Taschen an den Enden der Materialbahn stecken. Diese Taschen können auf einfache Weise dadurch gebildet werden, dass ein Endabschnitt der Materialbahn mit Rundung zurückgebogen und am zurückgebogenen Ende mit der Bahn durch eine Quernaht vernäht wird.

Ein besonders einfaches Öffnen und Schliessen der Transportschlaufe wird dadurch erreicht, dass die erste Vorrichtung zum Befestigen der wenigstens einen Materialbahn am Laufwagen mit dem Laufwagen fest verbunden ist, und dass die zweite Vorrichtung zum Befestigen der wenigstens einen Materialbahn am Laufwagen mit dem Laufwagen lösbar verbunden ist. Wird die zweite Vorrichtung vom Laufwagen gelöst, kann die Materialbahn grundsätzlich an der ersten Vorrichtung frei nach unten hängen und so das leichte Entladen der Transportschlaufe ermöglichen.

Es hat sich dabei als stabilisierend bewährt, wenn die erste Vorrichtung zum Befestigen der Materialbahn am Laufwagen über zwei voneinander in Querrichtung beabstandete Befestigungselemente mit dem Laufwagen fest verbunden ist.

Als Befestigungselemente sind dabei vor allem zwei parallele, vertikale Stangen vorgesehen, welche die erste Vorrichtung mit dem Laufwagen fest verbinden.

Demgegenüber kann die zweite Vorrichtung zum Befestigen der Materialbahn am Laufwagen mit dem Laufwagen vorzugsweise durch Einhaken lösbar verbunden werden. Das Ein- und Aushaken kann dabei grundsätzlich von Hand vorgenommen werden. Es ist aber ohne weiteres auch vollautomatisch möglich, wenn entsprechende Eingriffsmöglichkeiten zwischen der zweiten Vorrichtung und einer geeigneten Öffnungs- und Schliessmechanik vorhanden sind.

Insbesondere können zum Einhaken der zweiten Vorrichtung am Laufwagen hakenförmige Tragelemente angeordnet sein.

Alternativ kann zum Einhaken der zweiten Vorrichtung am Laufwagen ein ösenförmiges Tragelement angeordnet sein, in welches die zweite Vorrichtung mit einem Haken einhakbar ist.

Um eine Eingriffsmöglichkeit an der zweiten Vorrichtung bereitzustellen, kann die Querstange der zweiten Vorrichtung an beiden Enden seitlich über die Materialbahn hinaus ragen und dort jeweils ein Betätigungselement aufweisen, mittels dessen die zweite Vorrichtung mit seitlich an der Transportvorrichtung geordneten Einrichtungen in Eingriff gebracht werden kann.

Die Betätigungselemente können dabei an beiden Enden der Querstange gleich sein.

Insbesondere können die Betätigungselemente um die Längsachse der Querstange drehbar und aus der Gruppe der Rollen, Kugellager und Räder sein.

Die Betätigungselemente können aber auch an der Querstange drehfest montiert und halbkugelförmig, kugelförmig oder bombiert ausgebildet sein.

Um beim Eingriff ein Schwenken um die Längsachse der Querstange zu ermöglichen oder einen grösseren Abstand zu überbrücken, können die Betätigungselemente auch als Rollenhebel ausgebildet sein.

Eine weitere Ausgestaltung der Erfindung ist dadurch gekennzeichnet, dass die wenigstens eine Materialbahn mit einem Informationsträger ausgerüstet ist, welcher Informationen über die jeweilige Materialbahn bzw. Transportschlaufe und/oder das darin transportierte Transportgut enthält und/oder speichern kann. Hierdurch ist es möglich, den Weg des Transportgutes bzw. der Transportschlaufe selbst innerhalb der Transportvorrichtung zu verfolgen, bestimmte Reihenfolgen von Gütern entlang des Transportweges zusammenzustellen oder einzelne Güter gezielt aus einer solchen Reihenfolge herauszunehmen oder in eine solche Reihenfolge einzufügen.

Gemäss einer wiederum anderen Ausgestaltung sind an den Längsseiten der wenigstens einen Materialbahn randseitig Sicherungsbänder aufgebracht, welche an mehreren, in Längsrichtung mit Abstand hintereinander angeordneten Befestigungsstellen mit der Materialbahn lokal fest verbunden sind, derart, dass die zwischen zwei benachbarten Befestigungsstellen befindlichen Abschnitte der Sicherungsbänder sich beim Krümmen der Materialbahn aufwölben und eine Sicherung des in der Tragschlaufe transportierten Transportguts gegen seitliches Herausrutschen aus der Transportschlaufe bilden. Hierdurch kann auf besonders einfache und effektive Weise eine Sicherung realisiert werden, die sich beim Bilden der Transportschlaufe durch Einhängen der Materialbahn automatisch ausbildet und sich bei gerader Materialbahn wieder zurückbildet.

Eine weitere Art der Sicherung, und zwar gegen ein unabsichtliches Aushaken der Materialbahn, ergibt sich, wenn zum Einhaken der zweiten Vorrichtung am Laufwagen hakenförmige Tragelemente angeordnet sind, in welche die zweite Vorrichtung mit einem Sicherungsabschnitt in einer ersten Drehstellung einhakbar ist und in einer zweiten Drehstellung gegen ein Aushaken gesichert ist. Dies ist insbesondere dann der Fall, wenn die Öffnung des Hakens so schmal ist, dass ein Sicherungsabschnitt mit einer halbkreisförmigen Querschnittsfläche nur in einer bestimmten Drehstellung die Öffnung passieren kann, während es in einer anderen Drehstellung nicht durch die Öffnung passt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1-12: jeweils in einer Seitenansicht und einer Ansicht in Förderrichtung verschiedene Ausführungsbeispiele einer Transportvorrichtung nach der Erfindung, die sich durch die Art der seitlichen Betätigungselemente unterscheiden;
- Fig. 13-14: in einer Seitenansicht und einer Ansicht in Förderrichtung ein weiteres Ausführungsbeispiel einer Transportvorrichtung nach der Erfindung, die sich durch eine Reduzierung der Tragelemente am Laufwagen auszeichnet;
- Fig. 15: in der Seitenansicht die geöffnete, frei am Laufwagen hängende Materialbahn beim Ausführungsbeispiel aus Fig. 1;
- Fig. 16a-c: in der Seitenansicht die mit beiden Enden am Laufwagen befestigte zu einer mit einem Transportgut gefüllten Transportschlaufe zusammengenommene Materialbahn beim Ausführungsbeispiel aus Fig. 1 (Fig. 16(a)), sowie Schritte beim Entladen der Transportschlaufe (Fig. 15(b) und (c));
- Fig. 17-18: in einer Seitenansicht und einer Ansicht in Förderrichtung ein weiteres Ausführungsbeispiel einer Transportvorrichtung nach der Erfindung, die sich durch eine Veränderung der Ankopplung der Transportschlaufe am Laufwagen auszeichnet;
- Fig. 19-20: in einer Seitenansicht und einer Ansicht in Förderrichtung ein weiteres Ausführungsbeispiel einer Transportvorrichtung nach der Erfindung, die andere seitliche Betätigungselemente aufweist;
- Fig. 21-22: in einer Seitenansicht und einer Ansicht in Förderrichtung eine zu einer Transportschlaufe gebogene Materialbahn mit Sicherungsbändern zur Sicherung gegen seitliches Herausrutschen;
- Fig. 23-24: eine bevorzugte Art der Sicherung gegen unabsichtliches Aushaken der Materialbahn; und
- Fig. 25: ein weiteres Ausführungsbeispiel der Transportvorrichtung nach der Erfindung mit mehr als einer (in diesem Beispiel zwei) Materialbahn, so dass mehrere Transportgüter getrennt voneinander transportiert werden können.

### WEGE ZUR AUSFÜHRUNG DER ERFINDUNG

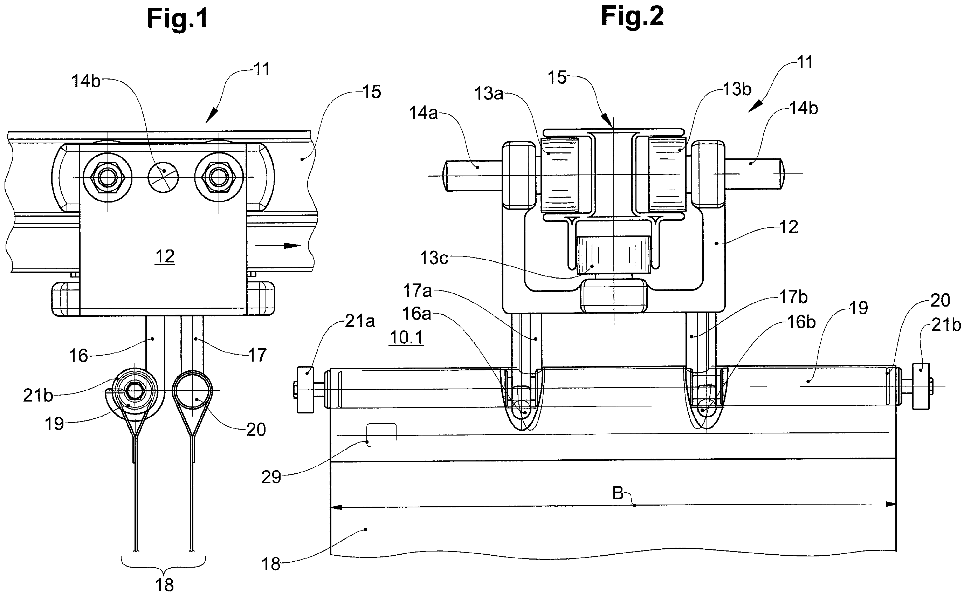

Die Figuren 1 und 2 zeigen jeweils in einer Seitenansicht (Fig. 1) und einer Ansicht in Förderrichtung (Fig. 2) ein Ausführungsbeispiel einer Transportvorrichtung nach der Erfindung.

Die Transportvorrichtung 10.1 der Fig. 1 und 2 umfasst eine sich in einer Förderrichtung (Pfeil in Fig. 1) erstreckende, im Beispiel der Fig. 1 horizontal verlaufende, Laufschiene 15, die im Beispiel aus einem mehrfach gebogenen Blechstreifen symmetrisch zu einer vertikalen Mittelebene hergestellt ist und zwei gegenüberliegende Tragschienen und eine unten in der Mitte ausgebildete Führungsschiene mit rechteckigem Profil aufweist. An der Laufschiene 15 hängend ist ein Laufwagen 11 in Schienenrichtung beweglich geführt. Der Laufwagen 11 hat einen U-förmigen Wagenkörper 12, der an beiden Schenkeln jeweils ein Paar von tragenden Laufrollen 13a und 13c und im unteren Bereich führende Laufrollen 13b trägt, mit denen er in die Laufschiene 15 seitlich und von unten eingreift.

Zwischen den seitlichen Laufrollenpaaren 13a und 13c ist jeweils ein seitlich nach aussen abstehender Mitnehmer 14a und 14b am Wagenkörper 12 angebracht, der den Wagen bei Bedarf in Eingriff mit einer Antriebsvorrichtung, einer Bremsvorrichtung, einer Schaltvorrichtung oder dgl. bringen kann. Vom unteren Boden des U-förmigen Wagenkörpers 12 stehen senkrecht nach unten ein Paar von quer zur Schienenrichtung beabstandeten Befestigungselementen 17 bzw. 17a,b und ein Paar von in Laufrichtung dahinter angeordneten Tragelementen 16 bzw. 16a,b ab.

Die beiden stangenförmigen Befestigungselemente 17 bzw. 17a,b sind am unteren Ende fest mit einer sich horizontal und quer und symmetrisch zur Schienenrichtung erstreckenden ersten Querstange 20 verbunden. Die beiden hakenförmigen Tragelemente 16 bzw. 16a,b nehmen eine parallel zur ersten Querstange 20 angeordnete zweite Querstange 19 auf, die gewissermassen in die beiden Haken 16a,b "eingelegt" und wieder herausgenommen werden kann.

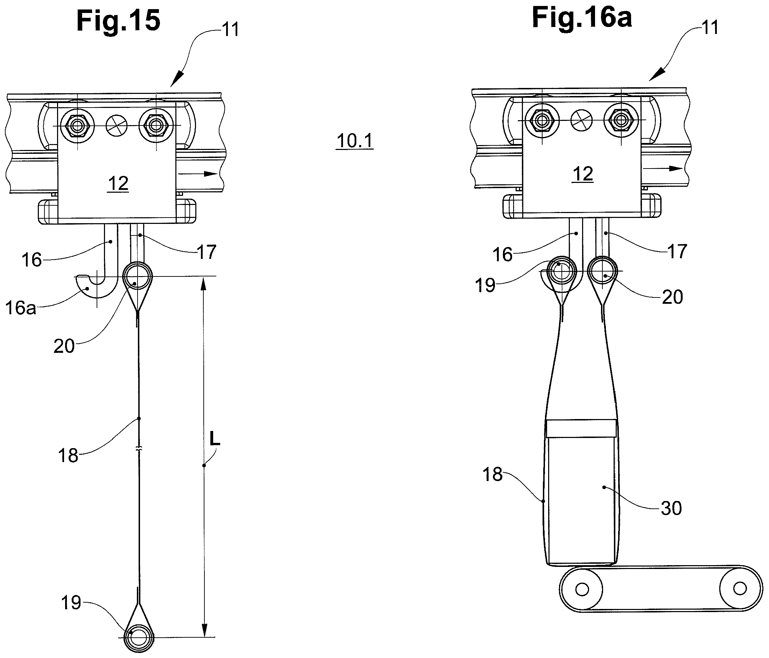

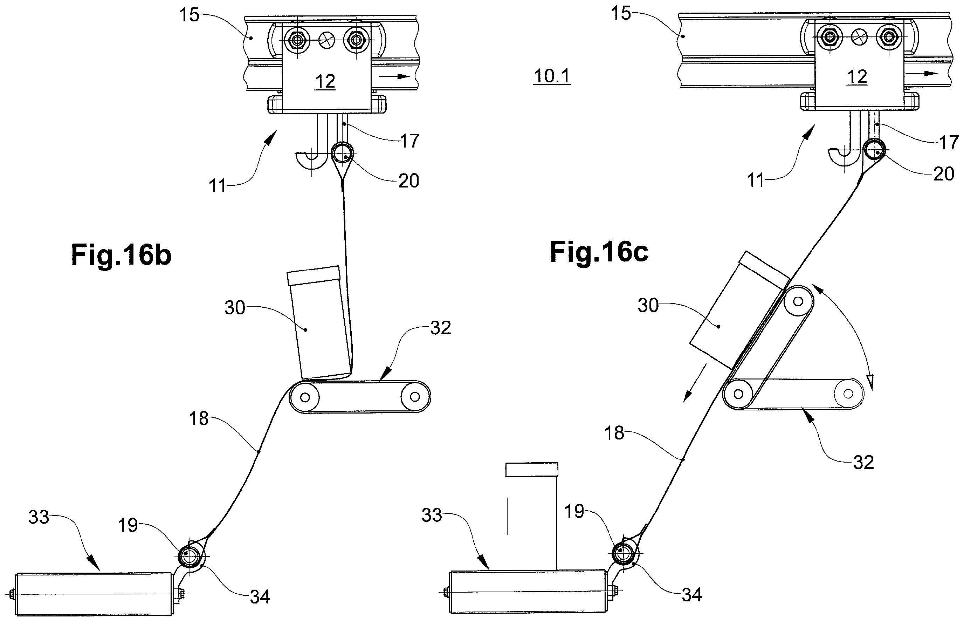

Jede der beiden Querstangen 19 und 20 steckt in einer zugehörigen endseitig ausgebildeten Tasche einer rechteckigen Materialbahn 18, die eine vorgegebene Breite B (Fig. 1) und eine vorgegebene Länge L (Fig. 15) aufweist. Im ausgehängten Zustand (Fig. 15) hängt die Materialbahn 18 nur über die Querstange 20 am Laufwagen 11 und mit der freien Querstange 19 senkrecht nach unten und hat so die Form einer ebenen Bahn. Im eingehängten Zustand (Fig. 16), bei dem die Querstange 19 in die hakenförmigen Tragelemente 16 bzw. 16a,b eingehängt ist, bildet die Materialbahn 18 eine seitlich offene Trag- oder Transportschlaufe, in die ein zu förderndes Transportgut 30 eingelegt sein kann. Die Materialbahn 18 kann mit einem Informationsträger 29 ausgerüstet sein, der aufgeklebt oder auf- oder eingenäht oder anderweitig befestigt ist. Insbesondere kann es sich bei dem Informationsträger 29 um ein RFID oder ein vergleichbares, auch optisch, kontaktlos auslesbares Element handeln, welches Informationen über die jeweilige Materialbahn 18 bzw. Transportschlaufe und/oder das darin transportierte Transportgut 30 enthält und/oder speichern kann.

Damit die in der Tasche der Materialbahn 18 steckende Querstange 19 in die hakenförmigen Tragelemente 16 bzw. 16a,b eingehängt werden kann, sind im Einhängebereich entsprechende Aussparungen in der Materialbahn 18 vorgesehen, durch die hindurch ein direkter Zugriff auf die in der Tasche befindliche Querstange 19 möglich ist (siehe Fig. 2). Darüber hinaus kann die Querstange 19 im Bereich der Aussparungen Abschnitte mit reduziertem Durchmesser aufweisen, die ein Verschieben der eingehängten Querstange 19 in Stangenlängsrichtung verhindern. Alternativ dazu kann zu dem gleichen Zweck eine an sich dünne Querstange 19 zwischen den beiden Tragelementen 16a,b eine Verdickung aufweisen.

An den beiden äusseren Enden der einhängbaren Querstange 19, die seitlich über die Breite B der Materialbahn 18 hervorstehen, sind jeweils Betätigungselemente 21a,b angeordnet, die im Ausführungsbeispiel der Fig. 1 und 2 die Form von einfachen, um die Mittelachse der Querstange 19 drehbaren Rollen haben. Mit diesen rollenartigen Betätigungselementen 21a,b kann die Querstange 19 beispielsweise auf einer auf beiden Seiten der Laufschiene 15 angeordneten Führungskulisse aufrollen und mittels der Kulisse nach oben bewegt werden, um die Querstange 19 automatisch auszuhängen und den in Fig. 15 dargestellten geöffneten Zustand zu erreichen. Entsprechend kann über die Betätigungselemente 21a,b auch ein automatisches Einhängen bewirkt werden (Übergang von Fig. 15 zu Fig. 16).

Die Querstangen 19 und 20 können aus Metall, Kunststoff oder Holz sein. Sie können aus Vollmaterial sein, aber auch rohrförmig ausgebildet sein.

Die Materialbahn 18 kann aus einem Gewebe bestehen, welches insbesondere beschichtet sein kann. Mit einer geeigneten Beschichtung kann das Gewebe wahlweise steifer, glatter oder stumpfer, elektrisch leitfähig oder feuchtigkeitsunempfindlich gemacht werden, um die Eigenschaften der Materialbahn an das zu fördernde Gut anzupassen. Ein versteiftes Gewebe ermöglicht eine bessere Schlaufenbildung und zeigt mehr Widerstand gegen Beschädigungen. Ein auf der Aussenseite glatteres Gewebe lässt benachbarte, sich gegenseitig berührende Schlaufen leichter aneinander abgleiten. Ein auf der Innenseite z.B. durch eine Gummierung stumpferes Gewebe verhindert ein Verrutschen des Transportgutes in der Transportschlaufe und dämpft Bewegungen des Transportgutes in der Schlaufe. Ein elektrisch leitfähiges Gewebe verhindert schädliche elektrostatische Aufladungen. Eine feuchtigkeitsunempfindliche Beschichtung schützt die Materialbahn gegen aus dem Transportgut auslaufende Flüssigkeiten.

Das Gewebe kann je nach Anforderung aus natürlichen oder künstlichen Fasern hergestellt sein. So bietet sich ein Gewebe aus hochfesten Fasern (z.B. Kevlar®) an, wenn schwere, kantige Gegenstände transportiert werden sollen. Auch kann die Gewebeart dem Einsatzzweck angepasst werden. Ein Gewebe bietet vor allem die Möglichkeit, die Taschen für die Querstangen 19, 20 durch eine Quernaht auszubilden.

Es ist aber auch denkbar, dass die Materialbahn 18 aus einer oder mehreren Folie(n) besteht, die laminiert sein können.

Die Materialbahn 18 hat im einfachsten Fall eine rechteckige Form mit einer vorgegebenen Breite B und einer vorgegebenen Länge L. Beide Grössen richten sich nach der Grösse der zu fördernden Gegenstände bzw. Waren. Insbesondere kann die Materialbahn 18 eine Breite von einigen Hundert mm aufweisen. Wenn die Transportvorrichtung beispielsweise zum Fördern von Kleidungsstücken oder ähnlich breitem Fördergut eingesetzt werden soll, ist es zweckmässig, wenn die Materialbahn eine Breite von etwa 500 mm aufweist.

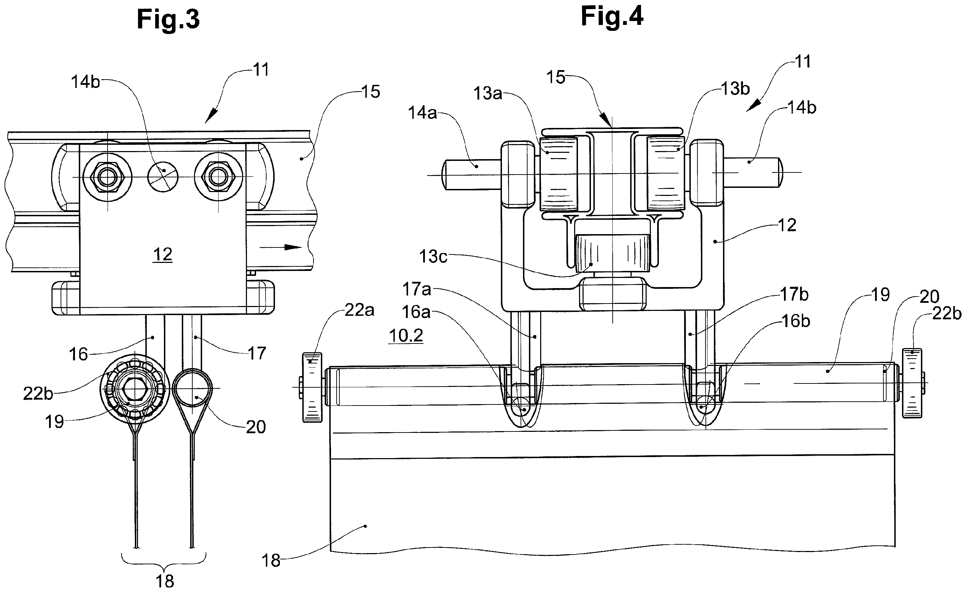

Die Fig. 3 bis 12 zeigen analog zu den Fig. 1 und 2 jeweils in einer Seitenansicht (Fig. 3, 5, 7, 9 und 11) und einer Ansicht in Förderrichtung (Fig. 2, 4, 6, 8, 10, 12) weitere Ausführungsbeispiele einer Transportvorrichtung nach der Erfindung, die sich von dem Ausführungsbeispiel aus Fig. 1 und 2 nur durch die Art der an Querstange 19 angebrachten seitlichen Betätigungselemente unterscheiden.

Beim Ausführungsbeispiel der Fig. 3 und 4 (Transportvorrichtung 10.2) sind anstelle der Rollen 21a,b Kugellager 22a,b vorgesehen, die einen besonders leichten Lauf haben und z.B. die für ein Aushaken der Querstange 19 notwendigen Kräfte weiter verringern.

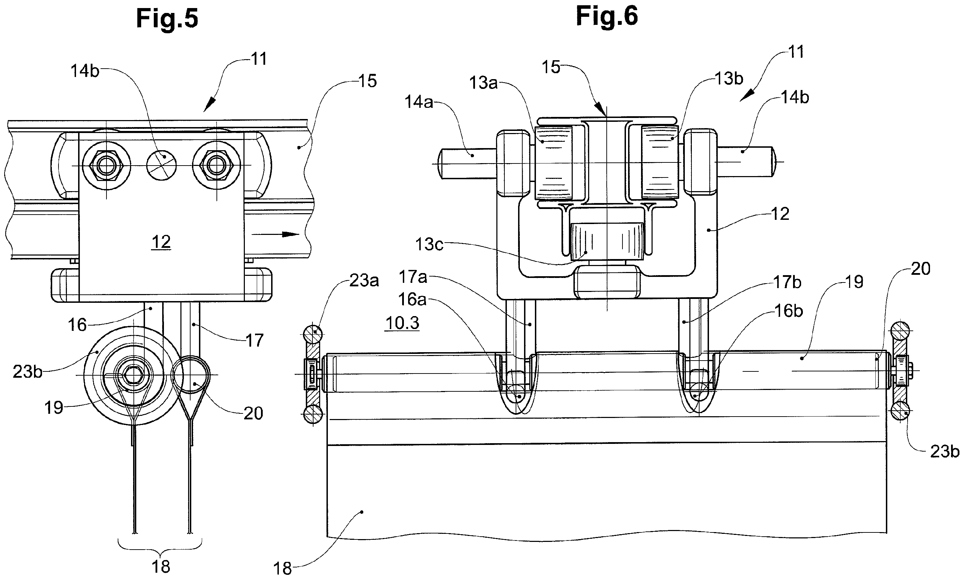

Beim Ausführungsbeispiel der Fig. 5 und 6 (Transportvorrichtung 10.3) sind anstelle der Rollen 21a,b bereifte Räder 23a,b vorgesehen, die einen geschmeidigen und vor allem auch leiseren Ablauf auf einer Führungskulisse ermöglichen.

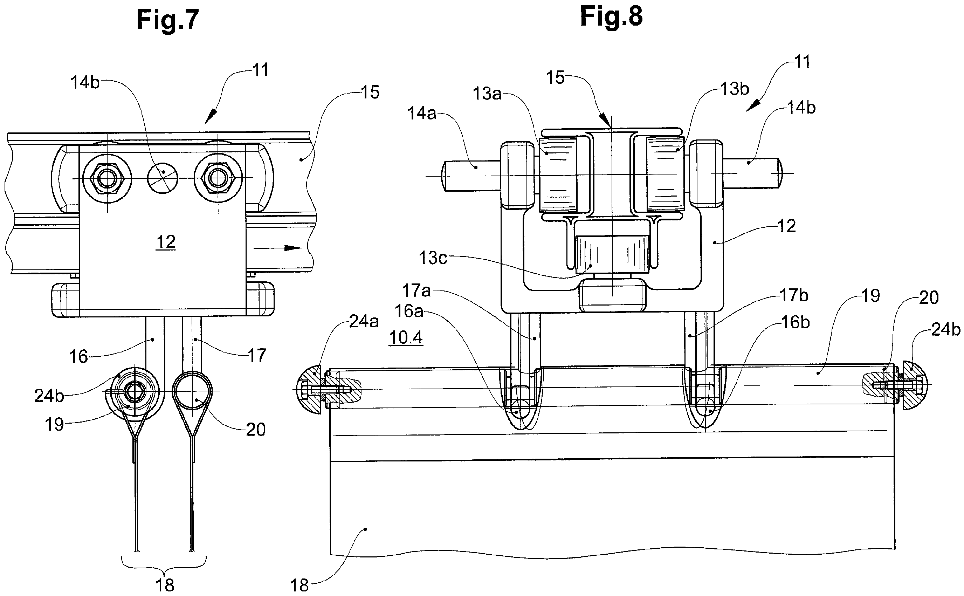

Beim Ausführungsbeispiel der Fig. 7 und 8 (Transportvorrichtung 10.4) sind anstelle der Rollen 21a,b halbkugelförmige, fest mit der Querstange 19 verschraubte Betätigungselemente 24a,b vorgesehen, die weniger störanfällig sind und einen gleitenden Eingriff ermöglichen.

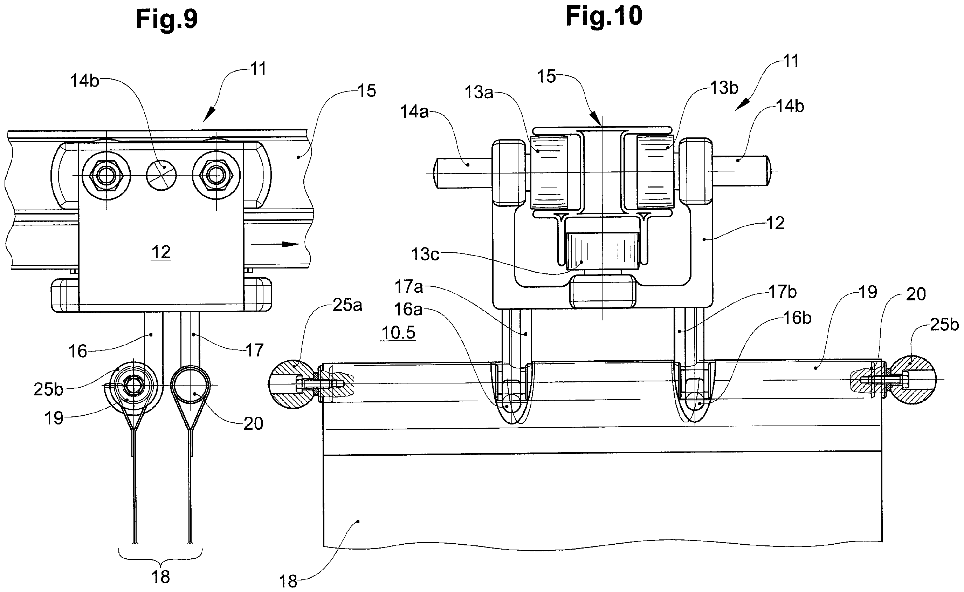

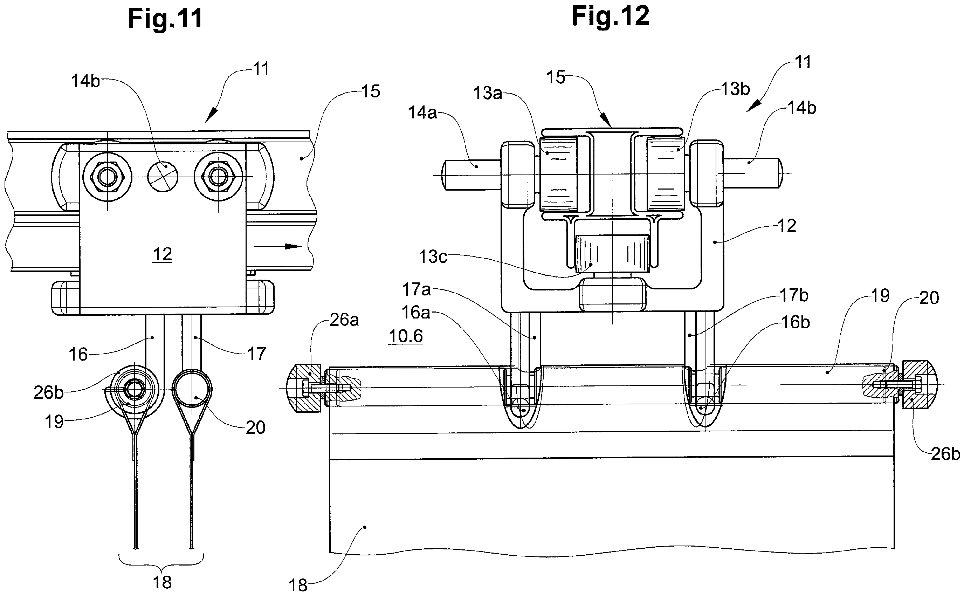

Ähnliche Vorteile werden mit den fest verschraubten kugelförmigen Betätigungselementen 25a,b im Ausführungsbeispiel der Fig. 9 und 10 (Transportvorrichtung 10.5) und mit den fest verschraubten bombierten Betätigungselementen 26a,b im Ausführungsbeispiel der Fig. 11 und 12 (Transportvorrichtung 10.6) erreicht.

Die Erfindung beschränkt sich nicht nur auf Querstangen 19 und 20 gleicher Länge, sondern lässt auch zu, dass die Querstangen unterschiedliche Längen haben können.

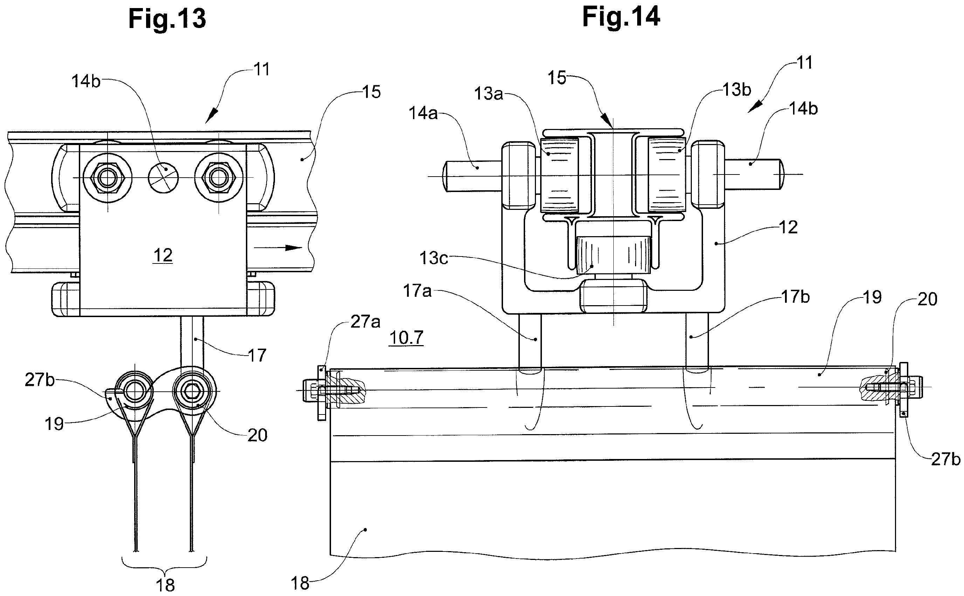

Das Ausführungsbeispiel der Fig. 13 und 14 (Transportvorrichtung 10.7) unterscheidet sich vom Ausführungsbeispiel der Fig. 1 und 2 (Transportvorrichtung 10.1) dadurch, dass auf die am Wagenkörper 12 angebrachten hakenförmigen Tragelemente 16 bzw. 16a,b ganz verzichtet wird und stattdessen zur Aufnahme der Querstange 19 Haken 27a,b an den Enden der Querstange 20 befestigt werden.

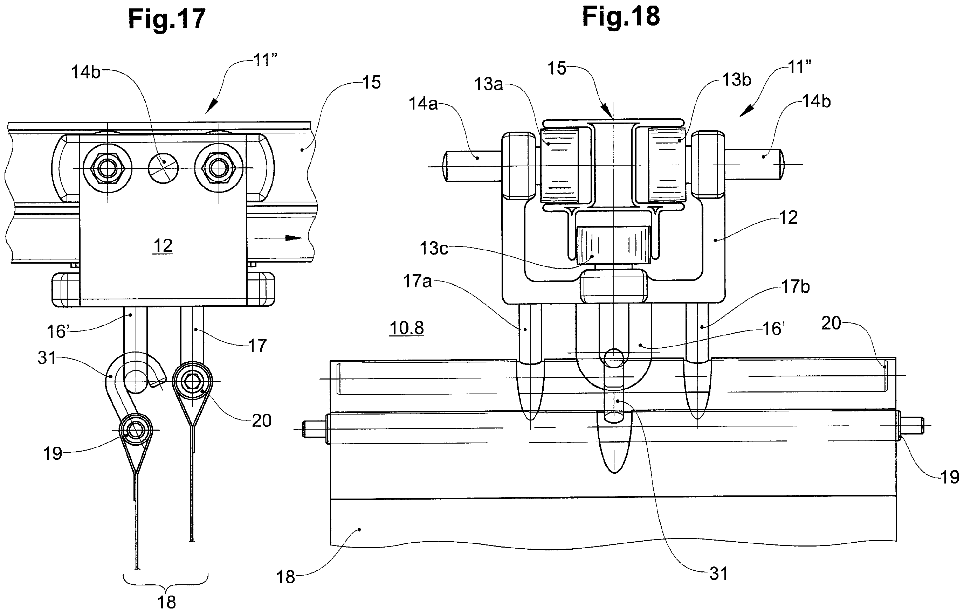

Beim Ausführungsbeispiel der Fig. 17 und 18 (Transportvorrichtung 10.8) wird das Einhängen der Querstange 19 ein ösenförmiges Tragelement 16' am Wagenkörper 12 angebracht, in welches die Querstange 19 mit einem daran mittig angebrachten Haken 31 eingehakt werden kann.

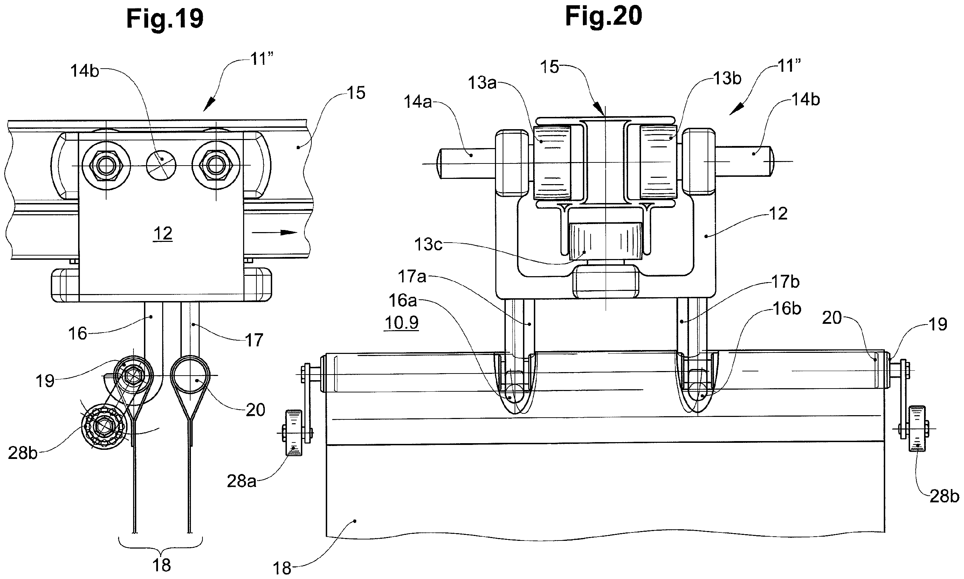

Schliesslich zeigt das Ausführungsbeispiel der Fig. 19 und 20 (Transportvorrichtung 10.9) als Betätigungselemente an den Enden der Querstange 19 angebrachte Rollenhebel 28a,b mit Kugellagern, mit denen die Eingriffsmöglichkeiten mit der Querstange 19 zusätzlich erweitert werden können.

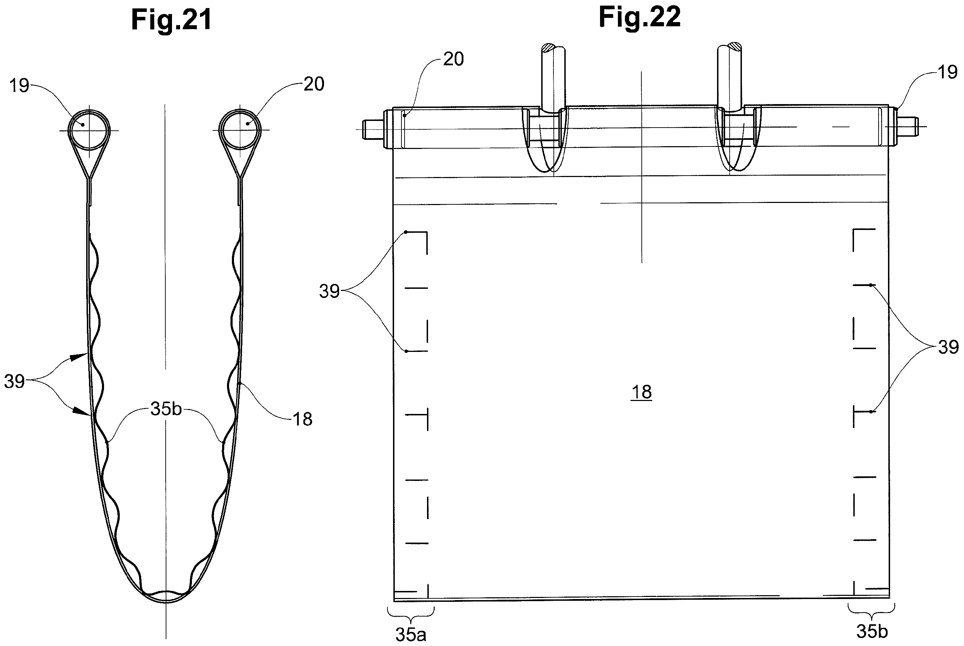

Grundsätzlich ist die aus der Materialbahn 18 gebildete Transport- oder Tragschlaufe gemäss Fig. 16(a) an den Seiten offen und unterscheidet sich so von einer auch seitlich geschlossenen Tasche. Gleichwohl können einfache und wirksame Mittel vorgesehen werden, um ein seitliches Herausrutschen des Transportgutes 30 zu verhindern oder zumindest zu erschweren. Geeignete Mittel dafür sind im Ausführungsbeispiel einer Transportschlaufe in Fig. 21 und 22 dargestellt. Dazu sind an den Längsseiten der Materialbahn 18 randseitig Sicherungsbänder 35a,b ähnlich wie Gardinenbänder aufgebracht. Diese Sicherungsbänder 35a,b sind jeweils an mehreren, in Längsrichtung mit (z.B. gleichem) Abstand hintereinander angeordneten Befestigungsstellen 39 mit der Materialbahn 18 beispielsweise durch Vernähen, Verkleben oder Klammern fest verbunden, während die zwischen zwei benachbarten Befestigungsstellen 39 befindlichen Abschnitte der Sicherungsbänder 35a,b mit der Materialbahn 18 nicht verbunden sind (Fig. 22).

Dies hat zur Folge, dass sich beim Krümmen der Materialbahn 18 die zwischen den benachbarten Befestigungsstellen 39 befindlichen Abschnitte der auf der Innenseite angebrachten Sicherungsbänder 35a,b sich aufwölben bzw. aufstellen und eine Sicherung des in der Tragschlaufe transportierten Transportguts 30 gegen seitliches Herausrutschen aus der Transportschlaufe bilden (Fig. 21). Selbstverständlich können die Sicherungsbänder 35a,b auf beiden Seiten der Materialbahn 18 angeordnet sein, wenn beide Seiten der Materialbahn 18 jeweils die Innenseite der Transportschlaufe bilden können, die Materialbahn also beidseitig nutzbar ist.

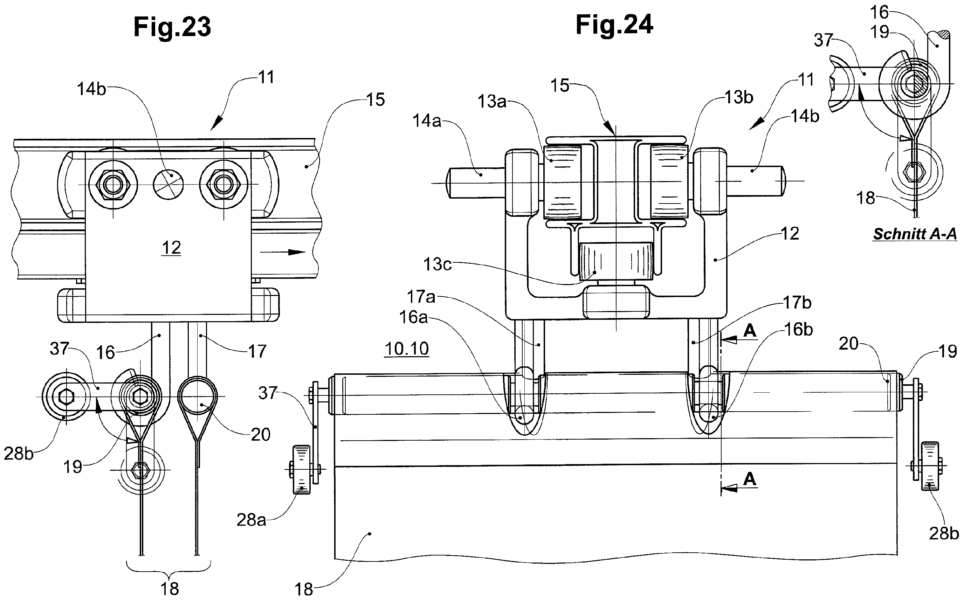

Eine weitere Art der Sicherung ergibt sich gemäss Fig. 23 und 24 dadurch, dass zum Einhaken der zweiten Vorrichtung bzw. Querstange 19 am Laufwagen 11 hakenförmige Tragelemente 16 mit Haken angeordnet sind, die eine besonders enge oder schmale Öffnung haben. Das Gegenstück zu dieser engen Hakenöffnung ist innerhalb der Vorrichtung 19 ein Sicherungsabschnitt mit einer z.B. halbkreisförmigen Querschnittsfläche (Schnittzeichnung A-A in Fig. 24 oben rechts), die so bemessen ist, dass die zweite Vorrichtung 19 mit dem Sicherungsabschnitt in einer ersten Drehstellung einhakbar ist (in Fig. 23 ausgezogen dargestellt) und in einer zweiten Drehstellung, die durch ein Verschwenken des Hebels 37 der Betätigungselemente 28a,b um 90° (in Fig. 23 gestrichelt dargestellt) durch Formschluss gegen ein Aushaken gesichert ist.

Das Beladen und Entladen der mittels der Materialbahn 18 durch Einhängen oder Einhaken gebildeten Transportschlaufe kann manuell oder automatisch erfolgen. Fig. 16(b) und (c) zeigen Schritte beim maschinellen Entladen einer Transportschlaufe. Dazu setzt zunächst die geschlossene Schlaufe mit dem Transportgut 30 gemäss Fig. 16(a) auf einem schwenkbaren Transportband 32 auf, das sich in einer horizontalen Lage befindet. Da das Transportgut 30 auf diese Weise vom Transportband gestützt wird, kann die Transportschlaufe einseitig ausgehängt und mit der Querstange 19 in eine Einhakvorrichtung 34 an einem weiteren horizontalen Transportband 33 seitlich eingehakt werden (Fig. 16(b)).

Durch Verschwenken des Transportbandes 32 aus der horizontalen in eine schräge Lage (Fig. 16(c)) kann das Transportgut 30 dann auf der Materialbahn 18 auf das weiter unten befindliche andere Transportband 33 rutschen, auf dem es abtransportiert wird. Selbstverständlich sind auch andere Arten und Vorgehensweise der Be- und Entladung denkbar.

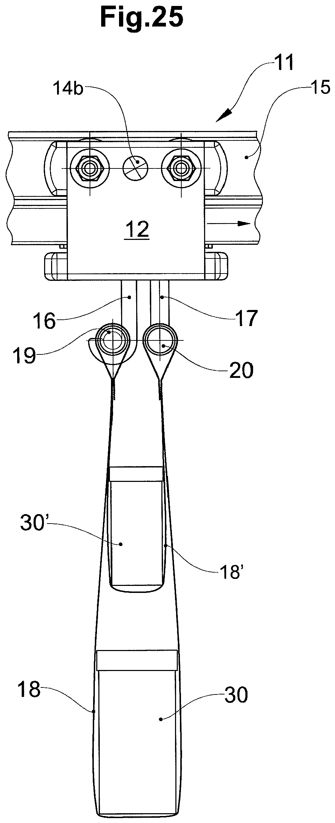

Schliesslich ist es im Rahmen der Erfindung ohne weiteres denkbar, anstelle nur einer Materialbahn 18 gemäss Fig. 25 mehrere Materialbahnen 18, 18' miteinander zu kombinieren, und zwar entweder, wie in Fig. 25 gezeigt, übereinander, oder auch nebeneinander. Auf diese Weise können mehrere Transportgüter 30, 30' getrennt voneinander transportiert werden. Das Be- und Entladen muss dann entsprechend angepasst werden.

Alle gezeigten Ausführungsbeispiele haben den der Erfindung zukommenden Vorteil, dass mit der wenigstens einen ein- und aushängbaren Materialbahn 18 eine besonders einfach aufgebaute und einfach betätigbare sowie äusserst robuste und funktionssichere Förderanlage verwirklicht werden kann.

## Patentansprüche

1. Transportvorrichtung (10.1-10.10), in Form eines Hängeförderers, welche Transportvorrichtung (10.1-10.10) einen oder mehrere Laufwagen (11) umfasst, die an einer Laufschiene (15) in Laufschienenrichtung beweglich gelagert sind und an denen jeweils nach unten hängend eine Vorrichtung (18, 19, 20) zur Aufnahme von Transportgut (30, 30') angeordnet ist, wobei die Vorrichtung (18, 19, 20) zur Aufnahme von Transportgut (30) wenigstens eine, im geöffneten Zustand ebene, flexible und in einem ungeführten Zustand herunterhängende Materialbahn (18, 18') bildet, welche mit ihren beiden Enden (19, 20) unter Ausbildung einer nach unten hängenden an beiden Seiten offenen Tragschlaufe bzw. Transportschlaufe am Laufwagen (11) befestigbar ist, wobei an den beiden Enden der wenigstens einen Materialbahn (18, 18') erste und zweite Vorrichtungen (19, 20) zum Befestigen der Materialbahn (18, 18') an einem der Laufwagen (11) angeordnet sind, wobei die Vorrichtungen (19, 20) zum Befestigen der Materialbahn (18, 18') am Laufwagen vorzugsweise je eine Querstange (19, 20) an jedem Ende der Materialbahn (18, 18') umfassen, und die Querstangen (19, 20) bevorzugt in dafür vorgesehenen Taschen an den Enden der Materialbahn (18, 18') stecken, wobei die erste Vorrichtung (20) zum Befestigen der wenigstens einen Materialbahn (18, 18') am Laufwagen (11) mit dem Laufwagen (11) fest verbunden ist, und die zweite Vorrichtung (19) zum Befestigen der wenigstens einen Materialbahn (18) am Laufwagen (11) mit dem Laufwagen (11) lösbar verbunden ist.

2. Transportvorrichtung nach Anspruch 1, **dadurch gekennzeichnet, dass** die wenigstens eine Materialbahn (18, 18') eine rechteckige Form mit einer vorgegebenen Breite (B) und einer vorgegebenen Länge (L) aufweist, wobei die wenigstens eine Materialbahn (18, 18') vorzugsweise ein Verhältnis von Breite (B) zu Länge (L) grösser 0,1 aufweist.

3. Transportvorrichtung nach Anspruch 1, **dadurch gekennzeichnet, dass** die wenigstens eine Materialbahn (18, 18') aus einem, insbesondere beschichteten, Gewebe besteht.

4. Transportvorrichtung nach Anspruch 1, **dadurch gekennzeichnet, dass** die erste Vorrichtung (20) zum Befestigen der Materialbahn (18, 18') am Laufwagen (11) über zwei Befestigungselemente (17; 17a,b) mit dem Laufwagen (11) fest verbunden ist, wobei als Befestigungselemente (17; 17a,b) vorzugsweise zwei parallele, vertikale Stangen vorgesehen sind, welche die erste Vorrichtung (20) mit dem Laufwagen (11) fest verbinden.

5. Transportvorrichtung nach Anspruch 4, **dadurch gekennzeichnet, dass** die zweite Vorrichtung (19) zum Befestigen der Materialbahn (18, 18') am Laufwagen (11) mit dem Laufwagen (11) durch Einhaken lösbar verbunden werden kann.

6. Transportvorrichtung nach Anspruch 5, **dadurch gekennzeichnet, dass** zum Einhaken der zweiten Vorrichtung (19) am Laufwagen (11) hakenförmige Tragelemente (16; 16a,b; 27a,b) angeordnet sind.

7. Transportvorrichtung nach Anspruch 5, **dadurch gekennzeichnet, dass** zum Einhaken der zweiten Vorrichtung (19) am Laufwagen (11) ein ösenförmiges Tragelement (16') angeordnet ist, in welches die zweite Vorrichtung (19) mit einem Haken (31) einhakbar ist.

8. Transportvorrichtung nach Anspruch 1, **dadurch gekennzeichnet, dass** die Querstange (19) der zweiten Vorrichtung an beiden Enden seitlich über die Materialbahn (18) hinaus ragt und dort jeweils ein Betätigungselement (21a,b bis 26a,b; 28a,b) aufweist, mittels dessen die zweite Vorrichtung (19) mit seitlich an der Transportvorrichtung (10.1-10.10) angeordneten Einrichtungen in Eingriff gebracht werden kann.

9. Transportvorrichtung nach Anspruch 8, **dadurch gekennzeichnet, dass** die Betätigungselemente (21a,b bis 26a,b; 28a,b) um die Längsachse der Querstange (19) drehbar und aus der Gruppe der Rollen (21a,b) Kugellager (22a,b) und Räder (23a,b) sind.

10. Transportvorrichtung nach Anspruch 8, **dadurch gekennzeichnet, dass** die Betätigungselemente (21a,b bis 26a,b; 28a,b) an der Querstange (19) drehfest montiert und halbkugelförmig (24a,b), kugelförmig (25a,b) oder bombiert (26a,b) ausgebildet sind.

11. Transportvorrichtung nach Anspruch 8, **dadurch gekennzeichnet, dass** die Betätigungselemente (21a,b bis 26a,b; 28a,b) als Rollenhebel (28a,b) ausgebildet sind.

12. Transportvorrichtung nach Anspruch 1, **dadurch gekennzeichnet, dass** an den Längsseiten der wenigstens einen Materialbahn (18, 18') randseitig Sicherungsbänder (35a,b) aufgebracht sind, welche an mehreren, in Längsrichtung mit Abstand hintereinander angeordneten Befestigungsstellen (39) mit der Materialbahn (18, 18') lokal fest verbunden sind, derart, dass die zwischen zwei benachbarten Befestigungsstellen (39) befindlichen Abschnitte der Sicherungsbänder (35a,b) sich beim Krümmen der Materialbahn (18, 18') aufwölben bzw. aufstellen und eine Sicherung des in der Tragschlaufe transportierten Transportguts (30) gegen seitliches Herausrutschen aus der Transportschlaufe bilden.

13. Transportvorrichtung nach Anspruch 5, **dadurch gekennzeichnet, dass** zum Einhaken der zweiten Vorrichtung (19) am Laufwagen (11) hakenförmige Tragelemente (16) angeordnet sind, in welche die zweite Vorrichtung (19) mit einem Sicherungsabschnitt (38) in einer ersten Drehstellung einhakbar ist und in einer zweiten Drehstellung gegen ein Aushaken gesichert ist.

## Claims

1. Transporting apparatus (10.1 10.10) in the form of an overhead conveyor, which transporting apparatus (10.1 10.10) comprises one or more carriages (11), which are mounted on a running rail (15) so as to be movable in the direction of the running-rail and on which an apparatus (18, 19, 20) for accommodating articles (30, 30) is arranged in a downwardly hanging state in each case, wherein the apparatus (18, 19, 20) for accommodating articles (30) forms at least one flexible material web (18, 18) which is planar in the open state, hangs down when in an unguided state and can have its two ends (19, 20) fastened on the carriages (11) to form a downwardly hanging carrying loop or transporting loop which is open on both sides, wherein first and second apparatuses (19, 20) are arranged at the two ends of the at least one material web (18, 18) for the purpose of fastening the material web (18, 18) on one of the carriages (11), wherein the apparatuses (19, 20) for fastening the material web (18, 18) on the carriage preferably each comprises a crossbar (19, 20) at each end of the material web (18, 18), and the crossbars (19, 20) preferably fit into pockets provided for this purpose at the ends of the material web (18, 18), wherein the first apparatus (20) for fastening the at least one material web (18, 18) on the carriage (11) is fixed to the carriage (11), and the second apparatus (19) for fastening the at least one material web (18) on the carriage (11) is connected to the carriage (11) in releasable manner.

2. Transporting apparatus according to Claim 1, **characterized in that** the at least one material web (18, 18) has a rectangular shape with a predetermined width (B) and a predetermined length (L), wherein the at least one material web (18, 18) has preferably a ratio of width (B) to length (L) of greater than 0.1.

3. Transporting apparatus according to Claim 1, **characterized in that** the at least one material web (18, 18) consists of a woven fabric, in particular a coated one.

4. Transporting apparatus according to Claim 1, **characterized in that** the first apparatus (20) for fastening the material web (18, 18) on the carriage (11) is fixed to the carriage (11) via two fastening elements (17; 17a,b), wherein the fastening elements (17; 17a,b) provided are preferably two parallel, vertical rods, which fix the first apparatus (20) to the carriage (11).

5. Transporting apparatus according to Claim 4, **characterized in that** the second apparatus (19) for fastening the material web (18, 18) on the carriage (11) can be connected to the carriage (11) in a releasable manner by hook-in action.

6. Transporting apparatus according to Claim 5, **characterized in that**, in order for the second apparatus (19) to be hooked in, hook-like carrying elements (16; 16a,b; 27a,b) are arranged on the carriage (11).

7. Transporting apparatus according to Claim 5, **characterized in that**, in order for the second apparatus (19) to be hooked in, an eyelet-like carrying element (16) is arranged on the carriage (11), it being possible for the second apparatus (19) to be hooked into said eyelet-like carrying element by way of a hook (31).

8. Transporting apparatus according to Claim 1, **characterized in that** the crossbar (19) of the second apparatus projects laterally beyond the material web (18) at both ends and has a respective actuating element (21a,b to 26a,b; 28a,b) there, it being possible for the second apparatus (19) to be brought into engagement, by way of said actuating element, with devices which are arranged laterally on the transporting apparatus (10.1-10.10)

9. Transporting apparatus according to Claim 8, **characterized in that** the actuating elements (21a,b to 26a,b; 28a,b) can be rotated about the longitudinal axis of the crossbar (19) and are made up from the group of rollers (21a,b), ball bearings (22a,b) and wheels (23a,b).

10. Transporting apparatus according to Claim 8, **characterized in that** the actuating elements (21a,b to 26a,b; 28a,b) are mounted in a rotationally fixed manner on the crossbar (19) and are of hemispherical (24a,b), spherical (25a,b) or cambered (26a,b) design.

11. Transporting apparatus according to Claim 8, **characterized in that** the actuating elements (21a,b to 26a,b; 28a,b) are designed in the form of roller levers (28a,b).

12. Transporting apparatus according to Claim 1, **characterized in that** securing tapes (35a,b) are fitted peripherally on the longitudinal sides of the at least one material web (18, 18), the securing tapes being locally fixed to the material web (18, 18) at a plurality of fastening locations (39), which are spaced apart one behind the other in the longitudinal direction, such that those portions of the securing tapes (35a,b) which are located between two adjacent fastening locations (39) arch or protrude when the material web (18, 18) is bent, this resulting in the articles (30) which are transported in the carrying loop being secured against slipping laterally out of the transporting loop.

13. Transporting apparatus according to Claim 5, **characterized in that**, in order for the second apparatus (19) to be hooked in, hook-like carrying elements (16) are arranged on the carriage (11) and the second apparatus (19), in a first rotary position, can be hooked into said hook-like carrying elements by way of a securing portion (38), and, in a second rotary position, is secured against unhooking.

## Revendications

1. Dispositif de transport (10.1 - 10.10), sous la forme dun convoyeur arien, lequel dispositif de transport (10.1 - 10.10) comporte un ou plusieurs chariots (11) qui sont monts mobiles sur un rail de roulement (15) dans la direction du rail de roulement et sur lesquels est dispos respectivement, de manire suspendue vers le bas, un dispositif (18, 19, 20) de rception de produit transporter (30, 30'), le dispositif (18, 19, 20) de rception de produit transporter (30) formant au moins une bande de matriau (18, 18') plane ltat ouvert, souple et pendant dans un tat non guid, laquelle bande de matriau peut tre fixe au chariot (11) par ses deux extrmits (19, 20) en formant une boucle de support ou une boucle de transport pendant vers le bas et ouverte des deux cts, des premier et deuxime dispositifs (19, 20) servant fixer la bande de matriau (18, 18') lun des chariots tant disposs aux deux extrmits de ladite au moins une bande de matriau (18, 18), les dispositifs (19, 20) servant fixer la bande de matriau (18, 18) au chariot comportant de prfrence respectivement une tige transversale (19, 20) chaque extrmit de la bande de matriau (18, 18'), et les tiges transversales (19, 20) sinsrant de prfrence dans des poches prvues cet effet aux extrmits de la bande de matriau (18, 18'), le premier dispositif (20) servant fixer ladite au moins une bande de matriau (18, 18') au chariot (11) tant reli solidement au chariot (11), et le deuxime dispositif (19) servant fixer ladite au moins une bande de matriau (18) au chariot (11) tant reli de manire amovible au chariot (11).

2. Dispositif de transport selon la revendication 1, caractris en ce que ladite au moins une bande de matriau (18, 18') prsente une forme rectangulaire de largeur prdfinie (B) et de longueur prdfinie (L), ladite au moins une bande de matriau (18, 18') prsentant de prfrence un rapport de la largeur (B) la longueur (L) suprieur 0,1.

3. Dispositif de transport selon la revendication 1, caractris en ce que ladite au moins une bande de matriau (18, 18') est constitue dune toffe en particulier revtue.

4. Dispositif de transport selon la revendication 1, caractris en ce que le premier dispositif (20) servant fixer la bande de matriau (18, 18') au chariot (11) est reli solidement au chariot (11) par le biais de deux lments de fixation (17 ; 17a,b), deux tiges verticales de prfrence parallles tant prvues en tant qulments de fixation (17 ; 17a,b), lesquelles relient solidement le premier dispositif (20) au chariot (11).

5. Dispositif de transport selon la revendication 4, caractris en ce que le deuxime dispositif (19) servant fixer la bande de matriau (18, 18') au chariot (11) peut tre reli de manire amovible au chariot (11) par accrochage.

6. Dispositif de transport selon la revendication 5, caractris en ce que des lments de support (16 ; 16a,b ; 27a,b) en forme de crochets sont disposs sur le chariot (11) pour laccrochage du deuxime dispositif (19).

7. Dispositif de transport selon la revendication 5, caractris en ce quun lment de support (16) en forme dillet est dispos sur le chariot (11) pour laccrochage du deuxime dispositif (19), lment de support dans lequel le deuxime dispositif (19) peut tre accroch laide dun crochet (31).

8. Dispositif de transport selon la revendication 1, caractris en ce que la tige transversale (19) du deuxime dispositif fait saillie latralement au-del de la bande de matriau (18) aux deux extrmits et y comprend respectivement un lment dactionnement (21a,b 26a,b ; 28a,b) au moyen duquel le deuxime dispositif (19) peut tre amen en prise avec des dispositifs disposs latralement sur le dispositif de transport (10.1 - 10.10).

9. Dispositif de transport selon la revendication 8, caractris en ce que les lments dactionnement (21a,b 26a,b ; 28a,b) peuvent tourner autour de laxe longitudinal de la tige transversale (19) et font partie du groupe des galets (21a,b), des paliers billes (22a,b) et des roues (23a,b).

10. Dispositif de transport selon la revendication 8, caractris en ce que les lments dactionnement (21a,b 26a,b ; 28a,b) sont monts de manire solidaire en rotation sur la tige transversale (19) et sont de forme semi-sphrique (24a,b), sphrique (25a,b) ou bombe (26a,b).

11. Dispositif de transport selon la revendication 8, caractris en ce que les lments dactionnement (21a,b 26a,b ; 28a,b) sont raliss sous forme de leviers galets (28a,b).

12. Dispositif de transport selon la revendication 1, caractris en ce que des bandes de scurit (35a,b) sont appliques du ct des bords sur les cts longitudinaux de ladite au moins une bande de matriau (18, 18'), lesquelles bandes de scurit sont relies fixement localement la bande de matriau (18, 18') en plusieurs points de fixation (39) disposs distance les uns derrire les autres dans la direction longitudinale, de telle sorte que les parties des bandes de scurit (35a,b) se trouvant entre deux points de fixation (39) adjacents se bombent ou se dressent en cas de courbure de la bande de matriau (18, 18') et ralisent une scurit du produit transporter (30) transport dans la boucle de support contre un glissement latral hors de la boucle de transport.

13. Dispositif de transport selon la revendication 5, caractris en ce que des lments de support (16) en forme de crochets sont disposs sur le chariot (11) pour laccrochage du deuxime dispositif (19), lments de support dans lesquels le deuxime dispositif (19) peut tre accroch par une partie de scurit (38) dans une premire position angulaire et est protg contre un dcrochage dans une deuxime position angulaire.
